Europäisches Patentamt

European Patent Office

Office européen des brevets

(19)

(11) **EP 0 930 317 A1**

(12) **EUROPEAN PATENT APPLICATION**

(43) Date of publication:
21.07.1999 Bulletin 1999/29

(51) Int. Cl.$^6$: **C08B 37/18**, A01G 1/00

(21) Application number: 98870012.6

(22) Date of filing: 21.01.1998

(84) Designated Contracting States:
AT BE CH DE DK ES FI FR GB GR IE IT LI LU MC
NL PT SE
Designated Extension States:
AL LT LV MK RO SI

(71) Applicant:
Tiense Suikerraffinaderij N.V. (Raffinerie
Tirlemontoise S.A.)
1150 Brussel (BE)

(72) Inventors:
• Smits, Georges
9308 Gijzegem-Aalst (BE)
• De Leenheer, Leen
3080 Tervuren (BE)

(74) Representative: Hermans, Johny
Tiense Suikerraffinaderij N.V.,
Patent Department,
Aandorenstraat 1
3300 Tienen (BE)

(54) **Process for the manufacture of chicory inulin, hydrolysates and derivatives of inulin, and improved chicory inulin products, hydrolysates and derivatives**

(57) The invention provides an improved process for the manufacture of chicory inulin, hydrolysates and derivatives of inulin by conventional manufacturing techniques from roots of chicory grown in appropriate regions and which have been grown and processed under proper climatological temperature conditions. Selection of said proper conditions enables to provide a growing and/or processing period for the chicory roots which may partly or wholly extend beyond the conventional periods.

The invention relates also to improved grades of chicory inulin, of hydrolysates of chicory inulin, such as e.g. a polydisperse oligofructose composition and a fructose composition, as well as to the use of these products in the manufacture of food, feed, drinks, prophylactic and therapeutical compositions , chemical derivatives and non-food compositions.

Improved standard grade chicory inulin according to the invention presents a degree of polymerisation ($\overline{DP}$) which is at least 20 % higher than the one of conventional standard grade chicory inulin.

EP 0 930 317 A1

## Description

### Field of the invention

The present invention relates to a process for the manufacture of chicory inulin, hydrolysates and derivatives of inulin, to the use of certain chicory roots in such process, as well as to improved chicory inulin products, hydrolysates and derivatives of chicory inulin.

### Background and prior art

Inulin is a carbohydrate which occurs in many plants and which can be produced by certain bacteria.

Inulin from plant origin consists of a polydisperse composition of chains of oligo- and polysaccharides which are composed of fructose units linked to each other through β(2-1) fructosyl-fructose linkages, and which mostly terminate in one glucose unit. Inulin from plant origin is usually composed of linear chains, but may also contain some branched chains.

Main plant sources for inulin are roots of Chicory (Cichorium intybus) and tubers from Dahlia and Jerusalem artichoke, in which inulin can be present, respectively, in concentrations of about 15 - 18%, 12% and 14 to 18 % on fresh weight. Inulin can be readily extracted from these plant parts, purified and optionally fractionated to remove impurities, mono- and disaccharides and undesired oligosaccharides, in order to provide various grades of inulin.

Inulin can be generally represented, depending from the terminal carbohydrate unit, by the general formulae $GF_n$ and $F_m$, wherein G represents a glucose unit, F represents a fructose unit, n is an integer representing the number of fructose units linked to the terminal glucose unit, and m is an integer representing the number of fructose units linked to each other in the carbohydrate chain.

The number of saccharide units (fructose and glucose units) in one molecule, i.e. the values n+1 and m in the above formulae, are commonly referred to as the degree of polymerisation, represented by (DP). Often also the parameter (number) average degree of polymerisation, represented by $(\overline{DP})$, is used, which is the value $\overline{DP}_n$ calculated, after complete hydrolysis, as follows:

$$\overline{DP}_n = \frac{total\%F}{total\%G} + 1$$

as in native inulins the $F_m$ fraction is to be considered as negligible (in the equation % refers to % w/w). Furthermore, in this calculation the saccharides glucose (G), fructose (F) and saccharose (GF) which are present in the polydisperse polysaccharide, should not be taken into account, and the average degree of polymerisation is thus the $(\overline{DP}_n)$ of inulin, herein interchangeably referred to in short as $(\overline{DP})$ inulin or $(\overline{DP})$ [cf. L. De Leenheer in" Production and use of inulin"; Carbohydrates as Organic Raw Materials, Vol. III, p. 67-92, (1996)].

The polysaccharide chains of native inulin from plant origin generally have a degree of polymerisation (DP) ranging from 3 to about 100, whereas the $(\overline{DP})$ largely depends from the plant source, the growth phase of the plant, the harvesting time, the storage conditions, and the process conditions used for the extraction and purification of the native inulin.

By the term native inulin is meant herein inulin that has been extracted from fresh plants or parts of plants, without applying any process to increase or decrease the $(\overline{DP})$, while taking precautions to inhibit the plant's own hydrolase activity (e.g. by briefly boiling the extract) and to avoid hydrolysis. The $(\overline{DP})$ of native inulin thus essentially corresponds to the $(\overline{DP})$ of the inulin as present in the plant or plant parts.

The inulin obtained from plants or plant parts through conventional manufacturing techniques, including extraction, purification and isolation, without any process to increase the $(\overline{DP})$ of the native inulin, is termed herein, interchangeably, standard $(\overline{DP})$ grade inulin or standard grade inulin. As a consequence of the manufacturing process, the $(\overline{DP})$ of standard grade inulin is usually about 1 to 1,5 lower than the $(\overline{DP})$ of the corresponding native inulin.

With respect to the average degree of polymerisation $(\overline{DP})$ of standard grade chicory inulin, a distinction has to be made between the punctual $(\overline{DP})$, which is the $(\overline{DP})$ of the inulin obtained from chicory roots processed at a specific moment of the growing or processing period, and the mean $(\overline{DP})$, which is the mean value of the $(\overline{DP})$ of the inulin obtained from chicory roots, taken over a predetermined processing period adjacent to the growing period. By the processing period of the roots is meant herein the period adjacent to the growing period up to the end of the processing of the chicory roots into inulin in a particulate form or up to a step in the inulin production where the intermediate obtained can be stored without degradation. Herein, the processing period thus includes the harvesting and storage period of the roots as well as their processing into inulin or up to a step in the inulin production where the intermediate obtained can be stored without degradation, e.g. by spray drying. Accordingly, by processing of the roots is meant herein the harvesting, possible storage and processing of the roots into inulin or into said intermediate.

As a result of the standardisation sought for commercial products, the value of the $(\overline{DP})$ of commercial standard grade inulin commonly corresponds to the value of the mean $(\overline{\overline{DP}})$ taken over the whole of the processing period, usually a period of about 60 to about 90 days.

The degree of polymerisation (DP) of native chicory inulin ranges from 3 to about 70. The punctual $(\overline{DP})$ of native inulin from chicory roots, which have been grown and processed under known, conventional conditions, ranges from about 10 to 14 (L. De Leenheer, o.c. , p. 71), whereas the mean $(\overline{\overline{DP}})$ of known standard grade chicory inulin, i.e. inulin obtained from chicory roots which have been grown and processed under known, conventional conditions, is ranging from about 9 to 11, and is typically about 10.

Inulin of general formulae $GF_n$ and $F_m$ having a lower degree of polymerisation, usually defined as a (DP) < 10, is commonly named oligofructose and is referred to hereinafter accordingly.

Inulin is commercially available. For example, inulin from chicory is available under the brand name RAFTILINE® from ORAFTI®, (Belgium). Typical RAFTILINE® products are, for example , ST, ST-Gel and GR (i.e. all standard $(\overline{DP})$ grade inulin but in a different physical form, with a mean $(\overline{DP})$ inulin of about 10 and containing as by-products in total maximum about 8 % by weight glucose, fructose and sucrose); LS (i.e. a low sugar standard $(\overline{DP})$ grade inulin with a mean $(\overline{DP})$ inulin of about 10 but which contains as by-products in total less than 1 % by weight glucose, fructose and sucrose); and HP and HP-Gel (i.e. both high performance grade inulin but in a different physical form, consisting both of fractionated, high $(\overline{DP})$ grade inulin with a $(\overline{DP})$ inulin of at least 23 which are essentially free of the by-products glucose, fructose and sucrose).

Although inulin has become available at industrial scale only from about 1990 onwards, it has already found major industrial applications in the food industry and is increasingly used also in the non-food industry.

Inulin is readily dispersible in aqueous liquids, is poorly soluble in cold water but fairly soluble in hot water and shows a good thermal stability. Depending from the presence and concentration of by-products, in particular monosaccharides, disaccharides and oligosaccharides, inulin has a taste ranging from slightly sweet to practically taste free. Inulin in food preparations, may, for example, improve texture and mouthfeel, and contribute to give more body and a smooth, creamy texture in low-fat products. Inulin also improves the stability of emulsions, dispersions, mousses, foams and creams. Furthermore, as disclosed in EP-A- 0 607 187, inulin can form with water a stable, fat-like, creamy structure (when subjected to mixing or shearing forces within a certain range of concentration and temperature). Moreover, inulin itself, i.e. when not taking into account mono- and disaccharides which are possibly present as by-products in the polydisperse polysaccharide, has a low caloric value, because when ingested, it is not digested in the small intestine of humans and many vertebrate animals, but is almost quantitatively entering the large intestine where it is fermented by bacteria, in particular by bifidobacteria. In view of its unique properties, inulin is widely used as a low calorie sugar replacement, fat replacement and/or texturising agent in various food products, e.g. in chocolate and confectionery products, in baked goods and breakfast cereals, in dairy products, such as desserts, creams, milks, cheeses, and yoghurts, in table spreads, in salad dressings, in fruit preparations, in frozen desserts, in meat products such as e.g. pates, and in drinks, as for example disclosed in EP-A- 0 599 830, EP-A- 0 607 187, EP-A- 0 607 189, and EP-A- 0 651 614. Moreover, inulin is also widely used in various feed products.

Furthermore, inulin which is a natural dietary fibre, has shown to have desirable health effects on humans and many vertebrate animals, such as e.g. beneficial prebiotic effects, in view of which inulin is already widely used in foods and drinks to improve the functioning of the digestive system, including stimulation of the grow, metabolism and activity of bifidobacteria while reducing those of less desirable intestinal bacteria.

Inulin has also been disclosed to have beneficial effects on lipid metabolism and to have prophylactic and therapeutic effects, e.g. on the genesis and development of breast cancer (EP-A-0 692 252) and of colon cancer in humans and non-bovine mammals (EP 97870069.8).

Furthermore, large quantities of inulin are used as raw material for the manufacture of oligofructose and fructose, products which are widely used in the food industry, e.g. in the manufacture of dairy products and drinks.

Besides, inulin is used as raw material for the manufacture of various chemical derivatives.

At present it is generally accepted that, compared to the actual applications and amounts used, inulin as such and as a raw material has still a much larger potential.

The strength of most technological and nutritional properties and effects of inulin, as well as its suitability as a raw material for the manufacture of oligofructose, fructose and inulin derivatives, are mostly proportional to its average degree of polymerisation $(\overline{DP})$: the higher the $(\overline{DP})$, the better.

Various processes for the manufacture of inulin from plant sources, including extraction, purification and fractionation, have already been disclosed.

In US 4.285.735, W.A. Mitchell et al. disclose a process for the manufacture of crystalline inulin from dahlia tubers which comprises a first isolation step wherein the tubers are finely ground and the water insolubles are removed from the water solubles; a next step wherein the obtained aqueous phase is boiled for a few minutes, followed by removal of the coagulated matter, concentration of the clarified solution to 40 - 70 % dry substance content, seeding with inulin crystals, cooling and storing for about 12 hours at 1° to 15° C; and a final step, in which the resulting crystalline inulin is isolated from the mother liquor and dried. No yield or average degree of polymerisation of the dry crystalline inulin has been disclosed.

In WO 94/12541 to Raffinerie Tirlemontoise S.A., a process is disclosed for removing to a large extent glucose, fructose and sucrose from standard grade chicory inulin via column chromatography techniques. The process involves charging a column containing a cation exchange resin with an aqueous, meta-stable, inulin solution containing 20 - 40 weight % dry substance, followed by elution with water preferably at 65 - 75°C, and yields inulin with a total concentration of said sugars below 1 weight %. This low sugar standard grade inulin has a ($\overline{DP}$) of about 10, which essentially corresponds to the ($\overline{DP}$) of the source chicory inulin.

Since many properties of inulin are favourably influenced by an increase of its average degree of polymerisation, various processes have already been developed for the preparation of inulin from plant sources with a ($\overline{DP}$) which is higher than the ($\overline{DP}$) of the corresponding native inulin.

One method, mentioned in International patent application WO 96/01849, consists in the fractionated precipitation of inulin from an aqueous solution by gradual decreasing the solubility of inulin in the solution through the addition of a lower alcohol. The longer polysaccharide chains precipitate before the shorter ones and can be separated from the latter by isolating them from the mixture, optionally in several fractions, by filtration or centrifugation. Accordingly, a rather pure product with a higher ($\overline{DP}$) than the ($\overline{DP}$) of the source inulin is obtained. However, the process is complex and laborious and the yield is very low, which makes the method technically and economically not attractive for a manufacture at industrial scale.

Furthermore, inulin with a higher ($\overline{DP}$) than native or source inulin can be prepared by classic fractional crystallisation techniques. Such method is for example described in Le Sillon Belge, April 24, (1989), according to which a warm aqueous polydisperse inulin solution is gradually cooled using ceiling temperatures between 40°C and 10°C, where necessary under grafting with inulin crystals. Since inulin molecules with a higher degree of polymerisation are less soluble than the ones with a lower degree of polymerisation, the former will precipitate before the latter, thus enabling to separate them from each other and to isolate them from the mixture by filtration or centrifugation. The method being laborious, is economically not attractive and hardly suitable for manufacture at industrial scale.

A similar method has been described by E. Berghofer (Inulin and inulin containing crops, Ed. A. Fuchs, Elseviers Sc. Publ., p. 77, (1993), according to which an aqueous solution of polydisperse chicory inulin is subjected to crystallisation with a slow cooling pattern (3°C/hour from 95°C to 4°C) under addition of grafting crystals. The longer inulin chains precipitating before the shorter ones, the former can be separated from the latter and are isolated by filtration or centrifugation. The method, however, suffers from disadvantages which are comparable to the ones of the method disclosed in Le Sillon Belge, indicated above.

According to a further method, described in EP 0 627 490 to Südzucker A.G., polydisperse native inulin is treated with inulinase enzyme to break down the inulin fraction with a low degree of polymerisation, thus increasing the ($\overline{DP}$) of the remaining inulin fraction. The degradation products formed, essentially glucose and fructose, have to be removed by a supplementary purification step, which forms a technical and economical drawback.

In WO 96/01849 to Tiense Suikerraffinaderij, an economically more attractive process is described for the manufacture at industrial scale of inulin with an average degree of polymerisation which is almost double or even higher, than the ($\overline{DP}$) of the source inulin. The process involves a directed crystallisation of inulin from a meta-stable aqueous solution of a polydisperse source inulin, yielding a suspension of crystallised inulin particles. Typically said source inulin is crude chicory inulin, i.e. inulin extracted from roots which has subsequently been subjected to a depuration treatment (i.e. a treatment involving liming, carbonatation and filtration) or standard grade chicory inulin with a mean ($\overline{DP}$) of about 10. The inulin particles formed are isolated by filtration or centrifugation. Before drying, they are washed with cold, demineralised water which removes most of the remaining impurities, mono- and disaccharides, as well as most of the remaining lower oligomeric polysaccharides (DP<10) from the particles. In this way, from a source chicory inulin with a (DP) ranging from 3 to about 70 and a ($\overline{DP}$) of about 10, high performance chicory inulin is obtained having a (DP) ranging from about 10 to about 70 and a ($\overline{DP}$) of about 20 to about 30 with an average yield of about 30 to about 35%. The isolated crystalline inulin can optionally be transformed into a powder form through spray drying techniques.

In view of its natural origin, its desirable technological properties and the fact that it is a dietary fibre with beneficial health effects on humans and many vertebrate animals, there is a steadily increasing demand in the food, the feed and the pharmaceutical industries, as well as in the non-food industries, for inulin, in particular for inulin grades with a higher ($\overline{DP}$).

Accordingly, industry is steadily facing the problem of providing technically and economically attractive methods and processes enabling the manufacture of inulin at industrial scale, preferably with improved yield and/or improved characteristics and properties, as, for example, an increased average degree of polymerisation.

The extraction of inulin from chicory roots, followed by purification, conventionally including depuration and refining (i.e. involving treatment over ion-exchangers, treatment with active carbon and filtration), optionally followed by fractionation, and isolation in particulate form of the obtained inulin, constitutes the most important manufacturing method of inulin at industrial scale. This is a result of the fairly availability of chicory roots, the inulin content of the roots, and the suitability of the roots for processing at large scale. The manufacturing techniques commonly used are well known in the art.

Chicory is conventionally cultivated in certain northern parts of Western Europe, where it is seeded in Spring (usually in April) and the roots are harvested, stored and processed for inulin production late Autumn, usually from about mid September to about end November, yielding through conventional manufacturing techniques standard grade chicory inulin with a mean ($\overline{DP}$) of about 10. The whole growing and processing period covers about 150 to about 230 days. It is known that the degree of polymerisation (DP) and the punctual ($\overline{DP}$) of the inulin, as well as the content of inulin in the chicory roots (i.e. the % by weight of inulin in the fresh root material) are increasing during the growing season to reach a maximum after about 150 days of growing, whereas the biomass of the roots and thus the yield (in ton/ha) of inulin increase till about the end of the growing season. The end of the growing season is the time when the biomass of the roots ceases to increase significantly (i.e. after about 180 to about 200 days of growing), which usually corresponds to the end of October. Towards the end of the growing season, the (DP) and punctual ($\overline{DP}$) of the inulin in roots remaining in the soil, as well as in harvested and stored roots, are decreasing with time, and the rate of decrease is usually significantly increased from about begin November. This situation considerably limits the periods for growing (including seeding and growing) and for processing (including harvesting, storage and processing) of the chicory roots for the production of inulin, hydrolysates and derivatives of inulin in a technically and economically attractive manner.

Consequently, in spite of the fact that the manufacture of inulin from chicory roots constitutes the most important route to inulin, said manufacture is nevertheless confronted with considerable hurdles and problems, including: (i) the limited period, including limitations in duration of the period as well as in time period of the year, during which chicory roots can be seeded, grown, harvested, stored and processed for the manufacture of inulin in a technically and economically attractive manner and/or without undergoing a significant decrease of the ($\overline{DP}$) of the inulin in the roots, (ii) the rather low mean ($\overline{DP}$) of standard grade chicory inulin (having a ($\overline{DP}$) of about 10), (iii) the need to include a fractionation step in the manufacturing process of chicory inulin when, e.g. for technological or nutritional reasons, inulin is required with a mean ($\overline{DP}$) which is higher than the mean ($\overline{DP}$) of about 10 of known standard chicory inulin, (iv) the rather poor yields of the known fractionation processes leading to inulin with a higher ($\overline{DP}$) when chicory inulin of standard grade (with a mean ($\overline{DP}$) of about 10) is used as the source inulin, and (v) the economical unattractive situation of the plants for the processing of the chicory roots. These plants are commonly operated during only a few months a year and are sized to process a large quantity of chicory roots in a very limited period. The processing itself of the roots for the manufacture of inulin, or of an intermediate as mentioned above, commonly takes about a day, whereas the processing period, including the harvesting, storage and processing of the roots, commonly lasts about 60 to about 90 days.

Objects of the invention

The present invention aims to solve one or more of said problems, inter alia, by providing a new process for the manufacture of chicory inulin. In particular, the invention aims to provide a process for the manufacture of chicory inulin, partial hydrolysates, complete hydrolysates and derivatives of inulin, from chicory roots with a growing and/or a processing period which partially or wholly falls outside the conventional ones. Furthermore, the invention aims to provide a process for the manufacture of standard grade chicory inulin with an increased mean ($\overline{DP}$) compared to known standard grade chicory inulin while possibly providing additional technical and economical advantages, to provide an improved standard grade chicory inulin and uses thereof, as well as to provide a process for the manufacture of high performance grade chicory inulin with increased yield. Furthermore, the invention aims to provide an improved process for the manufacture of hydrolysates and derivatives of chicory inulin.

Description of the invention

The production of inulin in chicory is an enzymatically driven process wherein the so-called SST gene and FFT gene of the chicory genome are involved.

The SST gene codes for a transferase enzyme that catalyses the transfer reaction of fructose from sucrose synthesised by the chicory plant, to form a lower-(DP) oligofructose (mainly $GF_2$), as schematically represented in equation (1) below, wherein G, F and GF respectively represent a glucose, fructose and sucrose unit, and GFF represents the lower-(DP) oligofructose $GF_2$:

$$GF+GF \rightarrow GFF+G \qquad (1)$$

The FFT gene codes for a transferase enzyme that catalyses the transfer of fructose from one oligofructose, usually a $GF_2$ oligofructose, to another, which results in the increase by one unit of the (DP) of the oligofructose substrate, finally resulting in inulin chains of the general formula $GF_n$ with a (DP) > 10, as schematically represented in equation (2a, 2b, and 2c) below, wherein G , F, n and GFF have the meaning defined above and GFFF, GFFFF, $GF_{n-1}$ and $GF_n$ represent an oligosaccharide or polysaccharide (inulin) depending on the value of n :

$$GFF + GFF \rightarrow GFFF + GF \qquad (2a)$$

$$GFF + GFFF \rightarrow GFFFF + GF \qquad (2b)$$

$$GFF + GF_{n-1} \rightarrow GF_n + GF \qquad (2c)$$

On the other hand, it is known that inulin chains can also undergo degradation in chicory roots subsequently to their synthesis.

It has now been found that the degradation is mainly catalysed by one or more enzymes with exohydrolase activity (hereinafter referred to as exohydrolase enzyme) coded for by one or more FEH genes (hereinafter referred to as FEH gene) of the chicory genome.

The degradation which occurs through a repetitive reaction, can be schematically represented by equation (3a) and (3b) below, wherein G, F, $GF_n$ and n have the meanings defined above:

$$GF_n \rightarrow GF_{n-1} + F \qquad (3a)$$

$$GF_{n-1} \rightarrow GF_{n-2} + F \qquad (3b)$$

; etc.

The inventors have now found that the activity of the FEH gene in the chicory plant, and thus the production of exohydrolase enzyme and the corresponding degradation of inulin chains in the chicory roots, are essentially triggered by the occurrence of conditions of low temperature during the processing period and during a large part of the growing period of the roots, particularly from the beginning of the third month of the growing period onwards.

By said conditions of low temperature are meant not only those temperature conditions at which the chicory roots become frozen (i.e. conditions at which plant cells in the roots are destroyed), but also those at which the roots become frost-bitten (i.e. conditions at which the cells in the roots are not destroyed, but at which, as a consequence of the activity of the FEH gene, an altered metabolism starts off according to which the roots start to metabolise the inulin molecules). Said low temperature conditions are, in particular, conditions corresponding to a temperature in thermometer shelter below about minus 1°C which corresponds to a temperature of about minus 3°C to minus 5°C at the soil surface.

It can be find out easily whether or not the FEH gene in the chicory roots has been triggered because triggering of the FEH gene is marked by a significant increase in concentration of fructose in the chicory roots (see equation (3a) and (3b) above).

Taking the above into account, the inventors have found that in appropriate regions for growing chicory which in addition have the proper climatological temperature conditions, chicory roots can be grown and processed into inulin or into hydrolysates or derivatives of inulin, outside the known, conventional growing and processing periods. They also found that improved chicory inulin products, particularly improved standard grade chicory inulin, can be obtained as well as improved hydrolysates and derivatives of said inulin, from chicory roots which have been grown and processed in said regions under said proper climatological temperature conditions.

By appropriate regions is meant herein regions which present the known conditions for growing chicory, such as, for example, conditions regarding soil and humidity.

By proper climatological temperature conditions are meant conditions which are such that the FEH gene in chicory roots is not triggered by the occurrence of low temperature conditions as defined above.

Based on the above findings, but not wishing to be bound by any theory set forth above, there is provided by the present invention a solution to one or more of the above mentioned problems regarding the provision of chicory inulin, hydrolysates and derivatives of inulin.

Accordingly, in a first embodiment of the invention, a process is provided for the manufacture of chicory inulin, hydrolysates of inulin or derivatives of inulin, from chicory roots through conventional manufacturing techniques, wherein the source material for the process are roots of chicory grown in appropriate regions and which have been grown and processed under proper climatological temperature conditions which are such that during a period of at least from the beginning of the third month of the growing period till the end of the processing of the chicory roots the FEH gene in the chicory roots has not been triggered ( i.e. not triggered at all or not triggered to a significant extent) by the occurrence of low temperature conditions, said chicory roots have had a growing period of at least 150 days, preferably of about 180 days, and said chicory has been seeded in the northern hemisphere within a period selected from the periods ranging from December 1 till March 14, from May 15 till May 31, and from June 1, preferably from June 15, till November 30, or in the southern hemisphere within a period selected from the periods ranging from June 1 till September 14, from September 15 till September 30, From October 1 till November 30, and from December 1 till May 31.

In a preferred embodiment, the climatological temperature conditions are such that the FEH gen is not triggered neither during a processing period of 60 days, more preferably 90 days, adjacent to the growing period.

In a preferred embodiment, the chicory inulin is standard grade chicory inulin with a $(\overline{DP})$ of at least about 10, low sugar standard grade chicory inulin with a $(\overline{DP})$ of at least about 10, or high performance grade chicory inulin with a $(\overline{DP})$ of at least about 20

In a further preferred embodiment, the chicory inulin is improved standard grade chicory inulin with a mean $(\overline{DP})$ of at least 12, more preferably of at least 14, improved low sugar standard grade chicory inulin with a mean $(\overline{DP})$ of at least 12, preferably of at least 14, or high performance grade chicory inulin with a mean $(\overline{DP})$ of at least 20, preferably at least 23, more preferably at least 25, the mean $(\overline{DP})$ being taken over a processing period of at least 60 days. To prepare inulin with a mean $(\overline{DP})$ being taken over a certain processing period, the batches of inulin obtained during said period are combined, for example by blending.

In a further preferred embodiment, the process yields a partial hydrolysate of inulin being preferably an oligofructose composition or a complete hydrolysate of inulin being a fructose composition, in particular a fructose rich fructose syrup.

The inventors have furthermore found that, in appropriate regions, under proper climatological temperature conditions, chicory roots can be grown and processed into inulin, including a growing period of the chicory of at least 160 days, preferably of about 180 days, and a processing period of the roots of at least 60 days, preferably of about 90 days, without that considerable inulin chain degradation occurs in the roots, and that from chicory roots grown and processed under these proper climatological temperature conditions, improved standard grade chicory inulin, can be obtained through conventional manufacturing techniques, without any fractionation, with a mean $(\overline{DP})$ taken over a processing period of at least 60 days, preferably of 90 days, which is at least 20% higher, usually from 30 to 50 % higher, and typically about 40% higher, than the mean $(\overline{DP})$ taken over a corresponding processing period of known standard grade chicory inulin.

By said proper climatological temperature conditions in this embodiment are meant conditions wherein the FEH gene in the chicory roots is not triggered (i.e. not triggered at all or not triggered to a significant extent) by the occurrence of said low temperature conditions within a period of at least 220, preferably at least 240, consecutive days immediately preceding the end of the processing of the roots.

By known standard grade chicory inulin is meant herein inulin obtained by conventional manufacturing techniques (without a process step to increase the $(\overline{DP})$ of the native inulin) from chicory roots which have been grown and processed under conventional climatological temperature conditions.

By conventional climatological temperature conditions is meant herein conditions wherein within a period of less than 220 consecutive days immediately preceding the end of the processing of the roots, low temperature conditions have occurred which triggered the FEH gene in chicory roots to a significant extent.

Whereas known standard grade inulin commonly has a mean $(\overline{DP})$ (over a processing period of at least 60 days) of about 10, improved standard grade inulin from chicory roots grown and processed under said proper climatological conditions has a mean $(\overline{DP})$ (over a processing period of at least 60 days), of at least 12, usually from 13 to 16, and typically of at least 14.

Accordingly, in a further embodiment of the present invention, a process is provided for the manufacture of improved standard grade chicory inulin from chicory roots through conventional manufacturing techniques, wherein the source material for the process are roots of chicory grown in appropriate regions and which have been grown and processed under proper climatological temperature conditions wherein, within a period of at least 220, preferably of at least 240, consecutive days immediately preceding the end of the processing of the roots, no low temperature conditions occurred which triggered the FEH gene in chicory roots, said roots have had a growing period of at least 160 days, the FEH gene in the chicory roots has not been triggered by the occurrence of low temperature conditions within the period from at least the beginning of the third month of the growing period till the end of the processing of the roots, and the product obtained is improved standard grade chicory inulin with a mean $(\overline{DP})$ taken over a processing period of at least 60 days adjacent to the growing period, which is at least 12, usually from 13 to 16, and preferably at least 14.

In a preferred embodiment, the climatological temperature conditions are such that no low temperature conditions which trigger the FEH gene in chicory roots occur within a total period of at least 270 consecutive days, more preferably of at least 300 consecutive days, immediately preceding the end of the processing of the roots, and most preferably within a period covering a complete year.

In a further preferred embodiment, the chicory has been seeded in the northern hemisphere at least within a period selected from the periods ranging from December 1 till March 14, from March 15 till May 14, from May 15 till May 31, and from June 1 till November 30, or in the southern hemisphere at least within a period selected from the periods ranging from June 1 till September 14, from September 15 till November 14, from November 15 till November 30 and from December 1 till May 31.

In the processes according to the invention the said proper climatological temperature conditions are preferably such that during the concerned period immediately preceding the end of the processing of the chicory roots the temperature in the temperature shelter has not dropped below minus 1°C, which usually corresponds to a soil surface temperature of about minus 3° to minus 5°C . More preferably, the temperature in the temperature shelter has not dropped below 0°C, usually corresponding to a soil surface temperature of about minus 2°C to minus 4°C. Most preferably, the temperature in the temperature shelter has not dropped below plus 3°C.

The inventors have found that appropriate regions for growing chicory which present, besides the known conditions for growing chicory, said proper climatological temperature conditions, do exist in certain regions of the USA, Europe, Africa, South America, and Asia. Typically, such appropriate regions with the proper climatological temperature conditions are found in the Californian region of the USA, in certain valleys of Chile, and in certain maritime regions of China, India and South Africa.

Under the proper climatological temperature conditions in accordance with the present invention, the yield of chicory roots per hectare (ranging from about 25 to 100 ton/hectare) as well as the total content of carbohydrates and the content of inulin in the roots (ranging, respectively, from about 14 % to about 20 % and from about 13 to about 19 % by weight of the fresh roots), are comparable to the ones observed for roots of chicory grown under conventional climatological temperature conditions.

The above process according to the invention does not only provide a new, improved standard grade chicory inulin, having improved properties, resulting from its higher ($\overline{DP}$) compared to known standard grade chicory inulin, but also an improved intermediate or source material for the manufacture of special grades of inulin, hydrolysates and derivatives of inulin.

The various process steps of the above processes for the manufacture of standard grade, improved standard grade, low sugar standard grade, improved low sugar standard grade, high performance grade, and improved high performance grade chicory inulin, of partial and complete hydrolysates and derivatives of standard grade and of improved grade chicory inulin, can be carried out by techniques which are well known in the art, some of which correspond well to techniques commonly used in the manufacture of sugar from sugar beets or cane.

In a typical execution form of said processes for the manufacture of, respectively, standard grade chicory inulin and improved standard grade chicory inulin, the conventional manufacturing techniques comprise the following consecutive steps:

(i) isolation of the inulin from the chicory roots, providing an aqueous solution of crude inulin;
(ii) purification of the crude inulin obtained in step (i), yielding an aqueous solution of purified inulin, optionally followed by concentration of this solution by partial removal of the water yielding purified inulin concentrate; and
(iii) isolation of the inulin from the aqueous solution or concentrate of purified inulin obtained in step (ii), yielding respectively standard grade chicory inulin and improved standard grade chicory inulin, in particulate form.

Suitable techniques for the isolation of inulin from chicory roots comprise, for example, grinding and wet milling or crushing of the chicory roots, or, preferably, extraction of the inulin from freshly sliced or shredded chicory roots with hot water.

Suitable techniques for the purification of the crude inulin obtained in step (i) comprise, for example, depuration of the aqueous liquid obtained in step (i) (involving e.g. liming and carbonatation or another flocculation technique, and filtration), followed by refining (involving e.g. treatment over ion-exchangers, treatment with active carbon and filtration, or ultrafiltration), whereas the solution can be concentrated by partial removal of the water by means of heat and/or reduced pressure. The isolation of the standard grade chicory inulin or improved standard grade chicory inulin in particulate form from the aqueous solution or concentrate of purified inulin obtained in step (ii) above is typically carried out by spray drying, as for example described in WO 94/19973.

In a further aspect of the invention, a process is provided for the manufacture of improved low sugar standard grade chicory inulin, containing in total less than 1 weight % monomeric saccharides and sucrose, wherein improved standard grade chicory inulin obtained in step (iii) of the above process or a solution or concentrate of purified inulin obtained in step (ii) of the above process, is used as a source material, and is, in accordance with known manufacturing techniques, subjected to the following consecutive steps:

(iv) removal of the monomeric saccharides and sucrose, yielding a low sugar standard grade inulin solution or concentrate, and
(v) isolating the low sugar standard grade inulin in particulate form from the solution or concentrate obtained in step (iv),

yielding improved low sugar standard grade chicory inulin with a mean ($\overline{DP}$), taken over a processing period of at least 60 days, of at least 12, typically of 13 to 16, preferably of at least 14.

Said removal of monomeric saccharides and sucrose can be carried out, for example as described in PCT patent application WO 94/12541, through column chromatography of an aqueous, meta-stable solution of the source inulin, whereas the improved low sugar standard grade chicory inulin obtained can be isolated in particulate form through spray drying, for example as described in PCT patent application WO 94/19973.

Moreover, the inventors also have found that starting from improved standard grade chicory inulin or from its intermediate, depurated inulin or purified inulin solution or concentrate obtained in step (ii) of the above process according to the invention, and having a mean ($\overline{DP}$) of at least 12, the yield of high performance grade chicory inulin obtained through conventional fractionation techniques is significantly increased compared to the yield obtained by said conventional techniques when known standard grade inulin or its intermediate, depurated or refined inulin solution or concentrate, with a mean ($\overline{DP}$) of about 10, is used as a source material.

By high performance grade chicory inulin is meant herein inulin which has been subjected to one or more fractionation processes to increase the ($\overline{DP}$) of the source inulin in order to reach a ($\overline{DP}$) of at least 20.

Whereas commonly a yield of high performance grade inulin of about 30 % to about 35 % is obtained (calculated on the dry substance of the source material) through conventional techniques starting from known standard grade chicory inulin or the corresponding intermediate depurated or refined chicory inulin with a ($\overline{DP}$) of about 10, as e.g. described in PCT patent application WO 96/01849, a yield of 40 % or more of high performance grade inulin of a ($\overline{DP}$) of at least 20 is obtained by said conventional techniques when improved standard grade inulin or its intermediate, depurated or refined inulin obtained in the process according to the present invention with a ($\overline{DP}$) of at least 12, preferably of at least 14, is used as a source material.

Accordingly, in a further aspect of the subject invention, an improved process is provided for the manufacture of high performance grade chicory inulin with a ($\overline{DP}$) of at least 20 which is essentially free from low molecular monomeric saccharides, dimeric saccharides and oligofructose, and essentially free from colourings, salts, proteins, organic acids and technological aids such as solubility affecting products, wherein improved standard grade chicory inulin or its intermediate, depurated or refined inulin solution or concentrate, obtained in step (ii) of the above process according to the invention, with a ($\overline{DP}$) of at least 12, is used as a source material and is subjected in accordance with known manufacturing techniques to the following consecutive steps:

(vi) fractionation , and

(vii) isolation in particulate form of the high performance grade inulin from the fractionated product obtained in step (vi), thereby yielding high performance grade chicory inulin with a ($\overline{DP}$) of at least 20 in a yield of 40 % or more based on the source inulin.

In a preferred embodiment, the high performance grade inulin is obtained in a yield of 45 % and has a ($\overline{DP}$) between 20 and 35, preferably of at least 23.

In another preferred embodiment the source material has a mean ($\overline{DP}$) of at least 14 and improved high performance grade chicory inulin is obtained in a yield of more than 40%, preferably at least 45%, typically between about 45% and 50%, based on the source material, with a mean ($\overline{DP}$), taken over a processing period of at least 60 days, of at least 23, preferably of at least 25.

The steps of the above process for the manufacture of high performance chicory inulin can be carried out according to conventional techniques which are well known in the art. The fractionation is preferably carried out through directed crystallisation of an aqueous metastable inulin solution, yielding an aqueous suspension of fractionated inulin. The isolation of the fractionated inulin in particulate form from said suspension is commonly carried out by filtration, centrifuging or the like techniques, usually followed by washing with water and drying of the isolated particles, as e.g. described in PCT Patent Application WO 96/01849. When depurated inulin is used as a source material, it may be beneficial to include a refining step in the fractionation process.

Optionally, the obtained high performance grade inulin can be transformed into a powder form composed of particulates and/or aggregates or conglomerates, by thinning the isolated high performance grade inulin with water followed by spray drying according to known techniques, as for example described in PCT patent applications WO 94/19973 and WO 96/01849.

Furthermore, chicory inulin obtained according to the present invention can optionally be associated in the isolation step of the inulin particulates, or in an additional step, to other food or feed components, such as, for example, sucrose, high intensity sweeteners, dairy, and extracts of coffee, cacao or tea, through known techniques, for example by co-spray drying as described in EP 96870099.7.

In a further aspect of the present invention, an improved process is provided for the manufacture of a polydisperse oligofructose composition, by known techniques from inulin, e.g. by partial, acidic or enzymatic, hydrolysis of inulin and subsequent purification, for example as described in patent application PCT/BE 97/00087, wherein improved standard grade chicory inulin with a ($\overline{DP}$) of at least 12, preferably of at least 14, or its intermediate, depurated or refined inulin solution or concentrate, obtained in a process according to the present invention described above, is used as a source material, and the obtained polydisperse oligofructose composition has a (DP) ranging from 2 to 10 and contains at least 90%, calculated on the dry substance, polysaccharide chains of formula $F_m$ and $GF_n$ wherein G and F have the meaning of a glucose unit and fructose unit, respectively, and n and m are integers.

In a further aspect of the subject invention, an improved process is provided for the manufacture according to known techniques of a fructose composition by complete hydrolysis of chicory inulin, e.g. by acidic or enzymatic hydrolysis, followed by purification, for example, as described in patent application EP 97870111.8, wherein improved standard grade chicory inulin with a $(\overline{DP})$ of at least 12, preferably of at least 14, or its intermediate, depurated or refined inulin solution or concentrate, obtained in the above process according to the present invention, is used as a source material, thereby yielding directly, i.e. without a fractionation step, a fructose composition, for example a fructose syrup, containing at least 89 % by weight of fructose, calculated on dry substance. In the obtained fructose composition the ratio F/G is higher than in a fructose composition obtained by conventional techniques from known standard grade inulin or from its intermediate, depurated or refined inulin solution or concentrate.

In still another aspect of the subject invention, a process is provided for the manufacture according to known techniques of improved derivatives of inulin, for example by etherification, esterification, carboxymethylation, ethoxylation with ethylene oxide, cationisation or cross-linking, wherein improved standard grade chicory inulin or its intermediate, depurated or refined inulin solution or concentrate, or high performance grade inulin, obtained in the process according to the present invention described herein before, is used as a source material.

According to another embodiment, the present invention relates to improved standard grade chicory inulin with, expressed on dry matter, an inulin content of at least about 92% by weight and a maximal total content of glucose, fructose and sucrose of 8 % by weight, and with a mean $(\overline{DP})$ (after processing) - taken over a processing period of the chicory roots used as source material in the manufacture process of said inulin of at least 60 days, preferably of at least 90 days - of at least 12, typically of 13 to 16, preferably of at least 14.

In a further aspect, the invention relates to improved low sugar standard grade chicory inulin with, expressed on dry matter, an inulin content of more than 99% by weight and a total content of glucose, fructose and sucrose of less than 1% by weight, which has a $(\overline{DP})$ of at least 12, typically of 13 to 16, preferably of at least 14.

In still a further aspect, the invention relates to improved high performance grade chicory inulin which is essentially free from low molecular monomeric saccharides, dimeric saccharides and oligofructose, and essentially free from colourings, salts, proteins, organic acids and technological aids such as solubility affecting products, with a mean $(\overline{DP})$, taken over a processing period of the source chicory roots of at least 60 days, of at least 20, preferably at least 23, and more preferably of at least 25.

The said improved grades of chicory inulin are preferably present in the form of spray dried particulates or of spray dried aggregated and/or agglomerated particles, and are obtainable by the above described manufacturing processes according to the present invention.

In still a further aspect, the invention relates to an improved polydisperse oligofructose composition, respectively to an improved fructose composition, obtainable by partial, respectively by complete hydrolysis of improved standard or high performance grade chicory inulin according to the present invention, as defined above.

In another embodiment, the present invention relates to the use of roots of chicory grown in appropriate regions as a source material in a process for the manufacture of chicory inulin, of partial hydrolysates of inulin, of complete hydrolysates of inulin, or of derivatives of inulin, said roots having been grown and processed under proper climatological temperature conditions which are such that within a period of at least from the beginning of the third month of the growing period till the end of the processing period, the FEH gene in the chicory roots has not been triggered by the occurrence of low temperature conditions, said chicory roots have had a growing period of at least 150 days, preferably of at least 160 days, more preferably of at least 180 days, and said chicory has been seeded in the northern hemisphere within a period selected from the periods ranging from December 1 till March 14, from May 15 till May 30, and from June 1, preferably from June 15, till November 30, or in the southern hemisphere within a period selected from the periods ranging from June 1 till September 14, from September 15 till September 30, from October 1 till November 30, and from December 1 till May 31.

In a further embodiment, the present invention relates to the use of roots of chicory grown in appropriate regions as a source material in a process for the manufacture of chicory inulin, of partial hydrolysates of inulin, of complete hydrolysates of inulin, or of derivatives of inulin, said roots having been grown and processed under proper climatological temperature conditions which are such that within a period of at least 220 consecutive days, preferably at least 240 consecutive days, more preferably of at least 270 consecutive days, even more preferably of at least 300 consecutive days, and most preferably within a period covering a complete year, no low temperature conditions occur which trigger the FEH gene in chicory roots, and said roots preferably have had a growing period of at least 150 days, preferably of at least 160 days and more preferably of at least 180 days, and no low temperature conditions which triggered the FEH gene in the roots occurred from the beginning of the third month of the growing period till the end of the processing period of the roots.

Typical processes for said manufacture and typical grades of chicory inulin, of partial and complete hydrolysates of inulin, are, for example, the ones described above.

In still another embodiment, the present invention relates to the use of improved standard grade chicory inulin, improved low sugar standard grade chicory inulin and improved high performance grade chicory inulin according to the present invention in the manufacture of food, feed, and drinks, particularly in the manufacture of low calorie, dietary, functional, and prebiotic food compositions, feed compositions and drinks as well as in the manufacture of non-food compositions.

In still a further embodiment, the present invention relates to improved standard grade chicory inulin, improved low sugar standard grade chicory inulin and improved high performance grade chicory inulin according to the present invention for use in the manufacture of a prophylactic or therapeutic composition, for use as a medicament, and for use in a prophylactic and/or therapeutic method for treatment of humans and vertebrate animals, in particular for the stimulation of calcium-uptake, the increase of mineral bone density, for the prevention or treatment of osteoporosis and of cancer, typically breast cancer and colon cancer.

In an ultimate embodiment, the present invention relates to the use of improved standard grade chicory inulin, improved low sugar standard grade chicory inulin and improved high performance grade chicory inulin according to the present invention as a raw material in the manufacture of chemical derivatives of inulin, such as, for example, derivatives obtained by etherification, esterification, carboxymethylation, ethoxylation, cationisation and cross-linking.

The processes for the manufacture of the various mentioned grades of chicory inulin, hydrolysates and derivatives of inulin, the improved products and their uses according to the present invention, as well as the use for the manufacture of said products of chicory roots which have been grown and processed under the proper climatological temperature conditions in accordance with the present invention as defined above, present various considerable technological, nutritional and/or economical advantages over the known processes and products.

For example, the invention enables the direct manufacture by conventional techniques of improved standard grade chicory inulin as well as of improved high performance grade chicory inulin, with a mean ($\overline{DP}$) taken over a predetermined processing period which is significantly higher than the mean ($\overline{DP}$) of the corresponding known grade of chicory inulin. This obviously results in various cost savings, because no fractionation step, respectively no additional fractionation step, is required to obtain said improved inulin, thus resulting in savings of time and manufacturing costs. Furthermore, often smaller quantities of the improved inulin products can be used compared to the corresponding known inulin products in given compositions to obtain a predetermined technological effect, such as, for example, a stabilising or texturising effect. This also results in product savings and in cost savings and provides an increased flexibility in the content of ingredients of, for example, food, feed and drinks compositions. Hydrolysates from improved standard grade inulin or its intermediate present a higher fructose content, respectively a higher oligofructose content, than the corresponding hydrolysates from known standard grade chicory inulin without an additional refining of the source product or the hydrolysates, which obviously results in advantages with respect to e.g. nutritional aspects, manufacturing time and costs.

Chemical derivatives from improved standard grade chicory inulin according to the present invention can show improved physico-chemical properties and/or improved functionality compared to corresponding derivatives obtained from known standard grade chicory inulin.

Besides, by the selection of an appropriate region with the proper climatological temperature conditions for growing and processing roots of chicory in accordance with the present invention, it is possible to extend the conventional growing and processing periods in duration as well as in time period of the year. In regions with said proper climatological temperature conditions, chicory can not only be seeded or seedlings planted in the beginning of Spring, but also at other points in time of the year, for example, even in late Autumn. Accordingly, due to the non-triggering of the FEH gene under said proper climatological temperature conditions, the seeding period can be extended to a period of at least eight months compared to the conventional period of about 50 days. Also the harvesting, storage and processing of the chicory roots to produce inulin or hydrolysates is not limited any more to the end of Autumn, but can be spread over a large part of the year. The longer the period with the proper climatological temperature conditions, the longer the periods available for seeding, growing, harvesting, storage and processing of the chicory roots. In appropriately selected regions, it even becomes possible to seed, grow, harvest, store and process roots of chicory to produce inulin, hydrolysates and derivatives of inulin, around the year. This extended period for growing and processing chicory roots for the production of inulin, hydrolysates or derivatives of inulin, obviously results in significantly technical and economical advantages. For example, the supply of chicory roots for said production can be spread over large parts of the year, even over a complete year, and as a result thereof, the processing plants do not become confronted any more with one short period per year for the processing of the chicory roots. This makes it possible to down size the processing plants and/or exploit them more efficiently and in an economically more attractive manner.

The invention is illustrated by the examples given below.

Example 1 ( Comparative example):

Standard grade chicory inulin from chicory roots grown in Belgium under conventional climatological temperature conditions (fall harvest)

Chicory, variety Madonna, coated seeds, were seeded on 16/04 in Opheylissem (Belgium) and grown under non-irrigated conditions;
population of 150.000 plants/ha.
Harvest was done manually two-weekly from 16/09 until 10/12 and the roots were processed without delay.

A. Extraction of inulin was done at laboratory scale from chicory gratings which were prepared by slicing the roots in pieces of about 2cm/1cm/0,5 cm and blending them in a Warring* (* trade name) blender up to complete homogenisation. The extraction was performed by treating the gratings with boiling distilled water (300 g water for 60 g gratings in a 500 ml Duran* (*trade name) bottle). To achieve complete extraction, the mixture of gratings and water is incubated in a closed bottle at 75 °C for 60 minutes with stirring at 135 rpm. The pH of the mixture is set between 5,5 and 7, if necessary, before incubation to avoid acid hydrolysis. Finally, a centrifugation of 10 min at 4.500 rpm separated the solids from the supernatant, thus yielding the crude (native) inulin solution to which sodium azide (0,01%) was added for conservation.

Analysis of the average degree of polymerisation ($\overline{DP}$) of the inulin was performed by measuring fructose, glucose and saccharose on said supernatant by means of HPLC before and after complete hydrolysis with Fructozym* enzyme (* Trade name of NOVO NORDISK, Denmark) and applying following formula:

$$\frac{Fa\text{-}(Fb\text{+}GFb/2)}{Ga\text{-}(Gb\text{+}GFb/2} + 1 = (\overline{DP}) \text{ inulin}$$

Fa and Fb: fructose after and before hydrolysis
Ga and Gb: glucose after and before hydrolysis
GFb: sucrose before hydrolysis

The value ($\overline{DP}$) inulin thus obtained corresponds to the degree of polymerisation ($\overline{DP}$) of the native inulin (which does not takes into account the glucose, fructose and saccharose present).

The inulin content was measured by the same method based on the measurement of glucose, fructose and sucrose by HPLC before and after hydrolysis and dividing the result by 1,09 for compensation of the weight gain induced by the hydrolysis. Also the different dilutions, due to the extraction, stabilisation with sodium azide, buffering and enzymatic hydrolysis were taken into account.
The % inulin (wt % inulin) is obtained by the following formula:

$$\% \text{ inulin} = \left( \frac{Fa\text{-}(Fb\text{+}GFb/2) + Ga\text{-}(Gb\text{+}GFb/2)}{1,09} \right) \text{ x dilution factors}$$

The results are given in table 1 below.

Table 1

| Results on fresh roots: | | | |
|---|---|---|---|
| harvest date | growing + processing (days) | inulin content of fresh roots wt % | ($\overline{DP}$) of native inulin |
| 17/09 | 155 | 17,4 | 14,2 |
| 01/10 | 169 | 17,0 | 14 |
| 15/10 | 183 | 17,2 | 13,1 |
| 29/10 | 197 | 16,3 | 12,1 |
| 12/11 | 211 | 16,5 | 9,6 |

Table 1 (continued)

| Results on fresh roots: | | | |
|---|---|---|---|
| harvest date | growing + processing (days) | inulin content of fresh roots wt % | ($\overline{DP}$) of native inulin |
| 26/11 | 225 | 16,2 | 8,7 |
| 10/12 | 231 | 15,6 | 8,2 |

B. 300 kg of the roots harvested on 1/10, 29/10 and 26/11 were also processed at pilot scale.

Extraction was done on the sliced chicory roots with a counter current diffuser at 15 kg/hr as used in sugar beet processing (temperature of diffusion: 70-75°C; 125% drawing off; residence time 1hr; pH 5,4-5,8).

Depuration was performed by liming and carbonatation similar to beet processing at temperatures between 65 and 75 °C followed by filtration at 85°C.

Refining was done by treatment over a strong cation exchanger and a weak anion exchanger (treatment carried out twice), avoiding the pH to drop below 4,5, followed by a treatment with 1% activated carbon and filtered. The resulting syrup was evaporated up to a concentration of 35 Brix, spray dried on a Buchi* (* trade name) lab dryer to particles of 96 % dry matter and analysed. Results are given in table 2 below.

More then 80% yield (on inulin basis) of standard grade chicory inulin was thus obtained.

Table 2

| Results of standard grade chicory inulin obtained by processing at pilot scale | | | | |
|---|---|---|---|---|
| harvest date | days* | ($\overline{DP}$) native inulin | ($\overline{DP}$) standard grade inulin ** | loss in ($\overline{DP}$) by processing |
| 1/10 | 169 | 14 | 12,8 | 1,2 |
| 29/10 | 197 | 12,1 | 11,7 | 1,4 |
| 26/11 | 225 | 8,7 | 7,0 | 1,7 |

*total days growing + processing;
**(= after processing)

C. Manufacture of inulin at industrial scale:

Roots of chicory consisting mainly of the varieties Madonna, Orchies, and Cassel, seeded during April (in average about April 16) in Belgium were processed from 19/09 until 15/12 in a factory at Oreye (Belgium) under similar conditions as defined above for the process at pilot scale (diffusion at 72-76 °C; drawing off at 135 %; pH between 5,4-5,8.) Depuration and refining were done as described above for the process at pilot scale. After treatment with active carbon and filtration, processing continued with a filter sterilisation step before evaporation. The resulting syrup was spray dried on an industrial spray dryer (NIRO * (*Trade name) drying tower), yielding particles of 96 % dry matter content, and analysed. The results are shown in table 3 below. More then 85 % yield (on inulin basis) of standard grade inulin was thus obtained.

Table 3

| Results of standard grade chicory inulin obtained by processing at industrial scale. | | | | |
|---|---|---|---|---|
| harvest date | days* | ($\overline{DP}$) native inulin | ($\overline{DP}$) standard grade inulin | loss in ($\overline{DP}$) by processing |
| 1/10 | 169 | 13,9 | 12,7 | 1,2 |
| 15/10 | 183 | 12,5 | 11,2 | 1,3 |
| 29/10 | 197 | 11,9 | 10,6 | 1,3 |
| 12/11 | 211 | 9,6 | 8,1 | 1,5 |
| 26/11 | 225 | 8,9 | 7,3 | 1,6 |
| 10/12 | 231 | 8,5 | 6,9 | 1,6 |

* calculated from April 16

The mean ($\overline{DP}$) of the standard grade chicory inulin manufactured at industrial scale (mean value of ($\overline{DP}$) taken over the indicated period) thus obtained is shown in table 4.

Table 4

| Mean ($\overline{DP}$) of standard grade chicory inulin | | | |
|---|---|---|---|
| period taken | days of processing period | mean ($\overline{DP}$) native inulin | mean ($\overline{DP}$) standard grade inulin |
| 1/10->12/11 | 43 | 12,0 | 10,7 |
| 1/10->26/11 | 57 | 11,4 | 10,0 |
| 1/10->10/12 | 71 | 10,9 | 9,5 |

It is general practice in Belgium and in most parts of the northern hemisphere to stop the production of inulin before the end of November in order to be able to sell standard grade chicory inulin with a ($\overline{DP}$) of about 10. This requirement of ($\overline{DP}$) would not be reached including product from later harvesting dates.

Example 2:

Chicory inulin from chicory roots grown in California (USA ) under climatological temperature conditions according to the invention (fall harvest)

Chicory, cultivar Orchies, coated seeds, were planted on 26/03 in Dixon (USA) under irrigated conditions. Stand was 85.000 roots/ha. Harvest was done manually, monthly from 21/8 until 26/11 and the roots were processed without delay. Analysis of the native inulin was done according to the method described in Example 1. The results are shown in table 5 below.

Table 5

| Results on fresh roots: | | | |
|---|---|---|---|
| harvest date | growing + processing (days) | inulin content of fresh roots wt % | ($\overline{DP}$) native inulin |
| 21/8 | 149 | 15.8 | 16.6 |
| 24/9 | 183 | 17.1 | 18.0 |
| 29/10 | 218 | 16.5 | 17.9 |

Table 5 (continued)

| Results on fresh roots: | | | |
|---|---|---|---|
| harvest date | growing + processing (days) | inulin content of fresh roots wt % | ($\overline{DP}$) native inulin |
| 26/11 | 246 | 15.7 | 17.5 |

Example 3:

Chicory inulin from chicory roots grown in California (USA ) under climatological temperature conditions according to the invention (fall harvest)

Chicory, cultivar Cassel, coated seeds, were planted on 04/04 in Artois (USA) under irrigated conditions. Harvest was done manually, monthly from 21/08 until 26/11, and the roots were processed without delay. Analysis of the native inulin was done according to the method indicated in example 1. The results are shown in table 6 below.

Table 6

| Results on fresh roots: | | | |
|---|---|---|---|
| harvest date | growing + processing (days) | inulin content of fresh roots wt % | ($\overline{DP}$) native inulin |
| 21/08 | 140 | 15,3 | 15,0 |
| 19/09 | 169 | 16,7 | 17,4 |
| 24/10 | 204 | 17,0 | 18,2 |
| 26/11 | 237 | 17,1 | 15,4 |

Example 4:

Chicory inulin from chicory roots grown in California (USA ) under climatological temperature conditions according to the invention (Spring harvest)

Chicory, cultivar Madonna and Orchies, coated seeds, were planted end September and in October in Davis and Coalinga (USA). Harvest will be done manually the next year, from February until June and the roots processed without delay. Analysis of the native inulin will be done according to the method indicated in example 1. The results are pending.

Example 5:

Production of depurated inulin from chicory roots grown in Artois (California; USA ) under climatological temperature conditions according to the invention (Fall harvest)

15 kg chicory roots from Example 3 (Cassel cultivar; harvest on 26/11; with inulin content 17,1 % and ($\overline{DP}$) native inulin 15,4 ) were processed according to Example 1 into a crude (native) inulin syrup: the extraction was done on 3 batches of 5 kg roots which were sliced into small pieces of 0,3-0,8 cm thick, 0,3-0,8 cm wide and 2 to 6 cm long. The slicings were extracted by treatment with 7 kg boiling water and keeping the mixture at 75°C for 90 minutes at pH 5,4-5,8. The slicings were separated from the extract and the turbid liquid so obtained from the 3 batches were combined for further treatment.
In total 18,1 kg of extraction juice were obtained, representing about 2.200 grams of crude inulin. This juice could be stored until further processing by adding 0,01 % sodium azide.
Processing was continued by a depuration step comprising :

- heating of the juice to 85 °C for 15 minutes for resolubilisation of the inulin,
- cooling of the juice to 65°C and preliming,
- a first liming - carbonatation at 70-75°C, with filtration at 80-85°C, followed by a second liming - carbonatation at 70-75°C with filtration at 80-85 °C. The solution obtained was then concentrated by evaporation from about 15 Brix to about 32 Brix before further processing. In total 7,4 kg depurated juice at 32 Brix were obtained showing a 85 % inulin purity. If processing was not continued without delay, the juice was kept frozen till further processing.

Example 6:

Manufacture of standard grade inulin from chicory roots grown in Artois (California; USA ) under climatological temperature conditions according to the invention (Fall harvest)

3 kg of depurated juice at 32 Brix obtained in example 5 was heated at 95 °C for 20 minutes, cooled down to 35 °C and send subsequently over 1 l of strong cation exchanger, 1 l of weak anion exchanger, 0,5 l strong cation exchanger and 0,5 l of weak anion exchanger. Accordingly, the solution was treated with 1% powdered activated carbon at 60°C, filtered, evaporated to 35 Brix and spray dried in a laboratory Buchi* spray drier (* Trade name)yielding particles with a 96 % dry matter content.
The obtained product is improved standard grade chicory inulin with a purity of more then 99,7 % inulin and a $(\overline{DP})$ of 14,2; (the loss of $(\overline{DP})$ due to processing was thus 1,2). The results of the analysis of the product performed by HPLC are given in table 7 below.

Table 7

| Composition of Improved standard grade chicory inulin (Results in % of total dry substance) | | |
|---|---|---|
| | Improved standard grade inulin | standard grade inulin * |
| | % | % |
| Fructose | 1,1 | 3,4 |
| Glucose | 0,5 | 1,2 |
| Sucrose | 4,7 | 10,2 |
| Inulin | 93,3 | 85 |
| Total | 99,6 | 99,8 |

\* comparative data obtained by applying the same procedure to crude inulin solution from example 1, harvest 29/10.

Extrapolating these results over a processing period (including harvesting and processing) from 19/9 to 26/11 results in a mean $(\overline{DP})$, thus taken over a processing period of 69 days, for the improved standard grade chicory inulin of 16,5.

Example 7:

Manufacture of high performance grade inulin from chicory roots grown in Artois (California; USA ) under climatological temperature conditions according to the invention (Fall harvest)

The method used is according the one described in patent application WO 96/01849, enclosed herein by reference, involving a directed crystallisation of inulin from a meta-stable aqueous polydisperse inulin solution.
1 kg of depurated juice at 32 Brix obtained in example 5, containing 270 grams of depurated inulin was poured in a Duran* (* Trade name) bottle and heated for 15 min in a pressure cooker to completely solubilise the inulin. Accordingly, this solution is cooled down to 20°C within a period of 5 minutes directly followed by adding an inulin grafting suspension in a ratio of 1/500 wt% (grafting dry matter/inulin dry matter). The solution was left for 20 hours for crystallisation, then filtered on a vacuum filter and the filter cake was washed with 330 grams of distilled water, yielding a filter cake at 42 % dry matter. After drying 127 grams of high performance (HP) grade chicory inulin, with a purity of >99,5% and a $(\overline{DP})$ of 29, were obtained. This corresponds to a yield of 47 %. (based on inulin).
When the same procedure (depuration and directed crystallisation) is applied to crude inulin solution (from example 1; harvest 29/10) resulting from roots with a $(\overline{DP})$ native inulin of 12,1, then the resulting high performance grade inulin has a $(\overline{DP})$ of 25 and is obtained in a yield of only 29% (based on inulin).

Example 8:

Manufacture of fructo-oligosaccharides from chicory roots grown in Artois (California; USA) under climatological temperature conditions according to the invention (Fall harvest)

1 kg of depurated juice at 32 Brix obtained in example 5 was heated at 95 °C for 20 minutes, cooled down to 60°C, pH adjusted to 5,4 with HCl and 160 Units of a preparation of an endo-inulinase (obtained by fractionation of an inulinase of Aspergillus ficuum as described by B. Norman et al., Denpun Kagaku, Vol., 36, 103-111, (1989) ) was added in accordance with the process described in patent application PCT/BE97/00087, enclosed herein by reference.

The juice was incubated then for 24 hr at 60°C, boiled for 2 minutes to deactivate the enzymes, cooled to 15°C and further refined as described in example 1, yielding an improved fructo-oligosaccharide (oligofructose) composition. The results of the analysis, performed by gaschromatography, of the obtained composition, in comparison to the composition obtained with crude inulin juice (from example 1) coming from roots with a $(\overline{DP})$ native inulin of 12,1, are given below in Table 8.

Table 8

| Composition of improved Fructo-oligosaccharide (Results in % of total dry substance (measured as Brix) ) | | |
|---|---|---|
| | Improved oligofructose composition | standard oligofructose composition * |
| Fructose | 4,0 | 4,4 |
| Glucose | 0,5 | 1,0 |
| Sucrose | 4,2 | 9,4 |
| other DP2 | 3,3 | 2,8 |
| GF2=DP3 | 2,8 | 6,3 |
| F3=DP3 | 27,5 | 21,8 |
| GF3=DP4 | 7,5 | 11,4 |
| F4=DP4 | 20,1 | 13,4 |
| GF4=DP5 | 10,0 | 12,4 |
| F5=DP5 | 6,5 | 3,8 |
| GF5=DP6 | 7,8 | 9,4 |
| F6=DP6 | 3,8 | 1,9 |
| GF6=DP7 | 1,1 | 1,3 |
| F7=DP7 | 0,4 | 0 |
| GF7=DP8 | 0,3 | 0,3 |
| GF8=DP9 | 0,1 | 0,1 |
| GF9=DP10 | 0,1 | 0,0 |
| TOTAL | 99,9 | 99,7 |
| % OLIGOFRUCTOSE | 91,2 | 84,9 |

* comparative data obtained by applying the same procedure to crude inulin solution from example 1; harvest 29/10.

Example 9:

Manufacture of fructose from chicory roots grown in Dixon (California; USA ) under climatological temperature conditions according to the invention (Fall harvest)

1 kg of depurated juice at 32 Brix obtained in example 5 was heated at 95 °C for 20 minutes, cooled down to 60°C, pH adjusted to 4,5 with HCl and 775 Units of Fructozym* enzyme (Trade name; NOVO NORDISK, Denmark) was added . The mixture was incubated for 24 hr at 60°C, boiled for 2 minutes to deactivate the enzymes, cooled to 15°C and further refined as described in example 1 yielding an improved fructose composition. The results of the analysis, performed by HPLC, of the obtained composition, in comparison to the composition obtained with crude inulin juice (from example 1) coming from roots with a ($\overline{DP}$) native inulin of 12,1, are given below in Table 9.

Table 9

| Composition of improved Fructose (Results in % of total dry substance (measured as Brix) ) | | |
|---|---|---|
| | Improved fructose composition | standard fructose composition |
| Fructose | 90,0 | 86,5 |
| Glucose | 8,2 | 11,3 |
| Sucrose | 0,3 | 0,4 |
| Difructosedianhydride | 1,3 | 1,6 |
| DP3 | 0 | 0 |
| Total | 99,8 | 99,8 |

## Claims

1.  Process for the manufacture of chicory inulin from chicory roots by conventional manufacturing techniques, wherein the source material for the process are roots of chicory which have been grown in appropriate regions and grown and processed under proper climatological temperature conditions which are such that during a period of at least from the beginning of the third month of the growing period till the end of the processing of the chicory roots the FEH gene in the chicory roots has not been triggered by the occurrence of low temperature conditions, said chicory roots have had a growing period of at least 150 days, and said chicory has been seeded in the northern hemisphere within a period selected from the periods ranging from December 1 till March 14, from May 15 till May 31, and from June 1 till November 30, or in the southern hemisphere within a period selected from the periods ranging from June 1 till September 14, from September 15 till September 30, from October 1 till November 30, and from December 1 till May 31.

2.  Process according to claim 1, wherein the chicory has had a growing period of at least 180 days.

3.  Process according to claim 1 or claim 2 wherein the chicory inulin is standard grade or low sugar standard grade chicory inulin with a ($\overline{DP}$) of at least 10, improved standard grade or improved low sugar standard grade chicory inulin with a mean ($\overline{DP}$) of at least 12, high performance grade chicory inulin with a ($\overline{DP}$) of at least 20, or improved high performance grade chicory inulin with a mean ($\overline{DP}$) of at least 20, the mean ($\overline{DP}$) being taken over a processing period of at least 60 days.

4.  Process for the manufacture of improved standard grade chicory inulin from chicory roots through conventional manufacturing techniques, wherein the source material for the process are roots of chicory grown in appropriate regions and which have been grown and processed under proper climatological temperature conditions wherein, within a period of at least 220 consecutive days immediately preceding the end of the processing of the roots, no low temperature conditions occurred which triggered the FEH gene in chicory roots, said roots have had a growing period of at least 160 days, the FEH gene in the chicory roots has not been triggered by the occurrence of low temperature conditions within the period from at least the beginning of the third month of the growing period till the end of the processing of the roots, and the product obtained is improved standard grade chicory inulin with a mean ($\overline{DP}$)

taken over a processing period of at least 60 days, which is at least 12.

5. Process according to claim 4, wherein the climatological temperature conditions are such that no low temperature conditions which trigger the FEH gene in chicory roots occur within a total period of at least 240 consecutive days, the chicory has had a growing period of at least 180 days, and the product obtained is improved standard grade chicory inulin with a mean ($\overline{DP}$), taken over a processing period of at least 60 days, which is at least 12.

6. Process according to claim 4 or claim 5 wherein the chicory has been seeded in the northern hemisphere at least within a period selected from the periods ranging from December 1 till March 14, from March 15 till May 14, from May 15 till May 31, and from June 1 till November 30, or in the southern hemisphere at least within a period selected from the periods ranging from June 1 till September 14, from September 15 till November 14, from November 15 till November 30, and from December 1 till May 31.

7. Process according to any of claims 1 to 6 wherein the said proper climatological temperature conditions are such that during the concerned period immediately preceding the end of the processing of the chicory roots the temperature in the temperature shelter has not dropped below minus 1°C.

8. Process according to any of claims 1 to 7 wherein appropriate regions for growing chicory which present, besides the known conditions for growing chicory, said proper climatological temperature conditions, comprise the Californian region of the USA, certain valleys of Chile, and certain maritime regions of China and India.

9. Process for the manufacture of standard grade chicory inulin or improved standard grade chicory inulin according to any of claims 1 to 8 wherein the conventional manufacturing techniques comprise the following steps:

(i) isolation of the inulin from the chicory roots yielding an aqueous solution of crude inulin,
(ii) purification of the crude inulin obtained in step (i) yielding an aqueous solution of purified inulin, optionally followed by concentration of this solution by partial removal of the water yielding a purified inulin concentrate, and
(iii) isolation in particulate form of the inulin from the aqueous solution or concentrate of purified inulin obtained in step (ii), thereby yielding, respectively, standard grade chicory inulin or improved standard grade chicory inulin.

10. Process according to claim 9, wherein the manufacturing techniques comprise:

- for step (i): extraction with hot water of the inulin from fresh slices or shreds of the chicory roots, yielding an aqueous solution of crude inulin,
- for step (ii): purification of the aqueous solution of crude inulin obtained in step (i) by depuration followed by refining, and
- for step (iii): isolation of, respectively, standard grade chicory inulin or improved standard grade chicory inulin, in particulate form by spray drying.

11. Process for the manufacture of low sugar standard grade chicory inulin or improved low sugar standard grade chicory inulin containing in total less than 1 weight % monomeric saccharides and sucrose, by conventional techniques from chicory roots, wherein the source material are chicory roots which have been grown and processed under the conditions as defined in any of claims 1 to 2, and 4 to 8.

12. Process for the manufacture of low sugar standard grade chicory inulin or improved low sugar standard grade chicory inulin containing in total less than 1 weight % monomeric saccharides and sucrose, wherein, respectively, standard grade chicory inulin or improved standard grade chicory inulin or the corresponding intermediate purified inulin, obtained by a process defined in any of claims 1 to 10 is used as a source material and is, in accordance with known techniques, subjected to the following additional consecutive steps:

(iv) removal of the monomeric saccharides and sucrose, yielding a low sugar inulin solution or concentrate, and
(v) isolating the low sugar inulin in particulate form from the solution or concentrate obtained in step (iv), and the product obtained is, respectively, low sugar standard grade chicory inulin with a mean ($\overline{DP}$) of at least 10 or improved low sugar standard grade chicory inulin with a mean ($\overline{DP}$) of at least 12, the mean ($\overline{DP}$) being taken over a processing period of at least 60 days.

13. Process for the manufacture by conventional techniques from chicory roots of high performance grade chicory inulin with a $(\overline{DP})$ of at least 20, or improved high performance grade chicory inulin with a mean $(\overline{DP})$, taken over a processing period of the chicory roots of at least 60 days, of at least 20, which are essentially free from low molecular monomeric saccharides, dimeric saccharides and oligofructose, and essentially free from colourings, salts, proteins, organic acids and technological aids, wherein the source material are chicory roots which have been grown and processed under the conditions as defined in any of claims 1 to 2, and 4 to 8.

14. Process for the manufacture of high performance grade chicory inulin with a $(\overline{DP})$ of at least 20, respectively of improved high performance grade chicory inulin with a mean $(\overline{DP})$, taken over a processing period of the chicory roots of at least 60 days, of at least 20, which are essentially free from low molecular monomeric saccharides, dimeric saccharides and oligofructose, and essentially free from colourings, salts, proteins, organic acids and technological aids, wherein standard grade chicory inulin with a $(\overline{DP})$ of at least 12, respectively improved standard grade chicory inulin with a mean $(\overline{DP})$, taken over a processing period of the chicory roots of at least 60 days, of at least 12, or its intermediate, depurated or refined inulin, obtained by a process defined in any of claims 1 to 10, is used as a source material and subjected, in accordance with known techniques, to the following consecutive steps:

> (vi) fractionation, and
> (vii) isolation in particulate form of the high performance grade inulin from the fractionated product obtained in step (vi), thereby providing high performance grade chicory inulin, respectively improved high performance grade chicory inulin in a yield of at least 40 % based on the source inulin.

15. Process according to claim 14, wherein the fractionation is carried out by directed crystallisation of an aqueous metastable inulin solution, and the isolation of the fractionated inulin in particulate form is carried out by filtration or centrifuging including washing with water.

16. Process according to any of claims 13 to 15, wherein the source inulin has a $(\overline{DP})$, respectively a mean $(\overline{DP})$ of at least 14, and the high performance grade chicory inulin is obtained in a yield of at least 45 % based on the source material and has a $(\overline{DP})$, respectively a mean $(\overline{DP})$ of at least 20, the mean $(\overline{DP})$ being taken over a processing period of the source chicory roots of at least 60 days.

17. Process for the manufacture of a partial hydrolysate of chicory inulin, by conventional techniques from chicory roots, wherein the source material are chicory roots which have been grown and processed under the conditions as defined in any of claims 1 to 2, and 4 to 8 and the product obtained is a polydisperse oligofructose composition.

18. Process for the manufacture of a partial hydrolysate of chicory inulin by conventional techniques, wherein respectively, standard grade or improved standard grade chicory inulin or the corresponding intermediates, depurated or refined inulin, obtained by a process defined in any of claims 1 to 10, is used as a source material, and the product obtained is a polydisperse oligofructose composition containing at least 90 % by weight dry substance and the oligofructose has a (DP) from 2 to 10,

19. Process for the manufacture of a complete hydrolysate of chicory inulin, by conventional techniques from chicory roots, wherein the source material are chicory roots which have been grown and processed under the conditions as defined in any of claims 1 to 2, and 4 to 8, and the product obtained is a fructose composition.

20. Process for the manufacture by known techniques of a complete hydrolysate of inulin, wherein, respectively, standard grade or improved standard grade inulin or the corresponding intermediate, depurated or refined inulin, obtained by a process defined in any of claims 1 to 10, is used as a source material, and the product obtained is a fructose composition containing at least 89 % by weight fructose, calculated on dry substance.

21. Process for the manufacture of a derivative of chicory inulin, by conventional techniques from chicory inulin or an intermediate thereof, wherein the source material for the inulin are chicory roots which have been grown and processed under the conditions as defined in any of claims 1 to 2, and 4 to 8.

22. Improved standard grade chicory inulin with an inulin content, expressed on dry matter, of at least 92% by weight, and a maximal total content of glucose, fructose and sucrose of 8 % by weight, characterised in that the inulin has a mean $(\overline{DP})$ taken over a processing period of the source chicory roots of at least 60 days, of at least 12, obtainable by a process according to any of claims 1 to 10.

**23.** Improved low sugar standard grade chicory inulin with, expressed on dry matter, an inulin content of more than 99% by weight, and a total content of glucose, fructose and sucrose of less than 1% by weight, characterised in that the inulin has a mean ($\overline{DP}$) taken over a processing period of the source chicory roots of at least 60 days, of at least 12, obtainable by a process according to any of claims 1 to 3 and 11 to 12.

**24.** Improved high performance grade chicory inulin which is essentially free from low molecular monomeric saccharides, dimeric saccharides and oligofructose, and essentially free from colourings, salts, proteins, organic acids and technological aids, with a mean ($\overline{DP}$), taken over a processing period of the source chicory roots of at least 60 days, of at least 20, obtainable by a process according to any of claims 1 to 3 and 13 to 16.

**25.** Improved polydisperse oligofructose composition containing at least 90 % by weight dry substance and wherein the oligofructose has a (DP) from 2 to 10, obtainable by a process according to claim 17 or 18.

**26.** Improved fructose composition containing at least 89 % by weight of fructose and having a ratio fructose/glucose of at least 90/10, obtainable by a process according to claim 19 or 20.

**27.** Method of use of roots of chicory as a source material in a process for the manufacture of chicory inulin, of a partial or a complete hydrolysate of inulin, or a derivative of inulin, characterised in that the roots have been grown in appropriate regions and grown and processed under proper climatological temperature conditions as defined in any of claims 1 to 2 and 4 to 8, and the processing period of said roots optionally can be extended to a period of at least 60 days adjacent to the growing period.

**28.** Method of use of improved standard grade chicory inulin, improved low sugar standard grade chicory inulin, improved high performance grade chicory inulin, an improved polydisperse oligofructose composition or an improved fructose composition, as defined in any of claims 22 to 26, as an ingredient in the manufacture of food, feed, drinks, a prophylactic or a therapeutic composition.

**European Patent Office**

## EUROPEAN SEARCH REPORT

Application Number

EP 98 87 0012

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | MICHAEL ERNST ET AL.: "Carbohydrate changes in chicory during growth and storage." SCIENTIA HORTICULTURAE, vol. 63, 1995, pages 251-261, XP002069326 * page 252, paragraph 2.1 * * page 259 * | 1-28 | C08B37/18 A01G1/00 |
| Y | CHEMICAL ABSTRACTS, vol. 127, no. 18, 3 November 1997 Columbus, Ohio, US; abstract no. 245507, BAERT JOOST R.A.: "The effect of sowing and harvest date and cultivar on inulin yield and composition of chicory roots." XP002069328 * abstract * & IND. CROPS PROD., vol. 6, no. 3,4, 1997, pages 195-199, | 1-28 | |
| Y | WIM VAN DEN ENDE ET AL.: "Fructan synthesizing and degrading activities in chicory roots (Cichorium intybus L.) during field-growth, storage and forcing." PLANT PHYSIOL., vol. 149, 1996, STUTTGART, pages 43-50, XP002069327 see summary | 1-28 | TECHNICAL FIELDS SEARCHED (Int.Cl.6) A01G C08B |
| A | LEEN DE LEENHEER ET AL.: "Progress in the elucidation of the composition of chicory inulin." STARCH/ DIE STÄRKE, vol. 46, no. 5, 1 May 1994, WEINHEIM, DE, pages 193-196, XP000442587 | 22-28 | |

The present search report has been drawn up for all claims

| Place of search | Date of completion of the search | Examiner |
|---|---|---|
| THE HAGUE | 25 June 1998 | Lensen, H |